# EUROPÄISCHE PATENTSCHRIFT

(11) **EP 0 767 715 B1**
(45) Veröffentlichungstag und Bekanntmachung des Hinweises auf die Patenterteilung: **17.03.1999**
(21) Anmeldenummer: 96911910.6
(22) Anmeldetag: 24.04.1996
(51) Int. Cl.: B23B 31/12, B23Q 11/00

(54) **SPANNELEMENT FÜR ARBEITSMASCHINEN MIT ROTIERENDEM BACKENFUTTER**
CLAMPING COMPONENT FOR MACHINES WITH ROTARY JAW CHUCKS
ELEMENT DE SERRAGE POUR MACHINES POURVUES D'UN MANDRIN A MACHOIRES ROTATIF

(30) Priorität: 28.04.1995 DE 19515644
(43) Veröffentlichungstag der Anmeldung: 16.04.1997
(73) Patentinhaber: Heidelberger Druckmaschinen Aktiengesellschaft, 69115 Heidelberg (DE)
(72) Erfinder: SCHENK, Rainer, Wilhelm, Heinrich, D-24147 Klausdorf (DE)
(86) Internationale Anmeldenummer: DE9600709
(87) Internationale Veröffentlichungsnummer: WO9633834

(56) Entgegenhaltungen:
- FR-A- 2 436 651
- GB-A- 2 244 439
- US-A- 4 563 013
- US-A- 4 655 464

## Beschreibung

Die Erfindung betrifft ein Spannelement für Arbeitsmaschinen mit rotierendem Backenfutter mit den Merkmalen des Oberbegriffs des Anspruchs 1 (siehe US-A-4563013). Derartige Arbeitsmaschinen werden in einer Vielzahl von Ausführungsformen eingesetzt, beispielsweise als Dreh-, Fräs- und Bohrmaschinen oder als Graviermaschinen zur Gravur von Druckzylindern für den Tiefdruck.

Bei einer Graviermaschine wird vor Gravurbeginn eingespannt. Die Einspannung des Druckzylinders erfolgt derart, daß ein Achsstück des Druckzylinders von einem rotierenden Backenfutter mit beispielsweise drei Klemmbacken gehalten wird.

Aus der US-A-4563013 ist bereits ein Spannelement für eine Bohrmaschinen bekannt, bei der die Klemmbacken eines Backenfutters relativ zu einer Rotationsachse radial verstellbar und verschiebbar in einem Träger gelagert sind, der mit einer Antriebswelle verbunden ist. Im Bereich des Trägers ist eine Eingriffsöffnung zum Einführen eines Verstellwerkzeuges für die Positionierung der Klemmbacken angeordnet. Der Träger ist von einer Schutzhülse umgeben, die in Richtung der Rotationsachse verschiebbar geführt wird. Die Schutzhülse weist eine Durchgangsöffnung auf, die in einer Handhabungs-Position der Schutzhülse überdekkend zu der Eingriffsöffnung und in einer Betriebs-Position versetzt zu der Eingriffsöffnung angeordnet ist.

Das bekannte Spannelement für eine Bohrmaschine weist jedoch noch gewisse Betriebseigenschaften auf, die nicht alle Anforderungen an eine optimale Arbeitssicherheit gewährleisten. Zum Verstellen der Klemmbacken des Backenfutters ist es erforderlich, in den rotationsfähig gelagerten Träger ein Verstellwerkzeug einzuführen. Bei einem unbeabsichtigten Anlauf der Arbeitsmaschine während des Einführens des Verstellwerkzeuges kann es zu Verletzungen eines Bedieners kommen. Ein weiteres Problem besteht darin, daß bei überstehenden Klemmbakken des rotierenden Backenfutters scharfe Kanten freiliegen, die bei einem unmittelbaren Kontakt mit der Hand des Bedieners Verletzungen hervorrufen können.

Aufgabe der vorliegenden Erfindung ist es daher, ein Spannelement für eine Arbeitsmaschine mit rotierendem Backenfutter konstruktiv derart zu verbessern, daß die Betriebssicherheit erhöht wird.

Diese Aufgabe wird erfindungsgemäß durch die im Anspruch 1 angegebenen Merkmale gelöst.

Vorteilhafte Weiterbildungen und Ausgestaltungen sind in den Unteransprüchen angegeben.

Die Erfindung wird nachfolgend anhand der Fig. 1 bis 4 näher erläutert.

Es zeigen:
- Fig. 1: einen Querschnitt durch einen mit einem Backenfutter versehenen Träger, der von einer Schutzhülse umgeben ist,
- Fig. 2: eine stark schematisierte Draufsicht auf einen Träger mit Backenfutter bei einer gegenüber der Fig. 1 veränderten Positionierung der Klemmbacken,
- Fig. 3: einen Querschnitt gemäß Schnittlinie III-III in Fig. 2 **und**
- Fig. 4: eine teilweise Darstellung eines Umfangsbereiches der Schutzhülse.

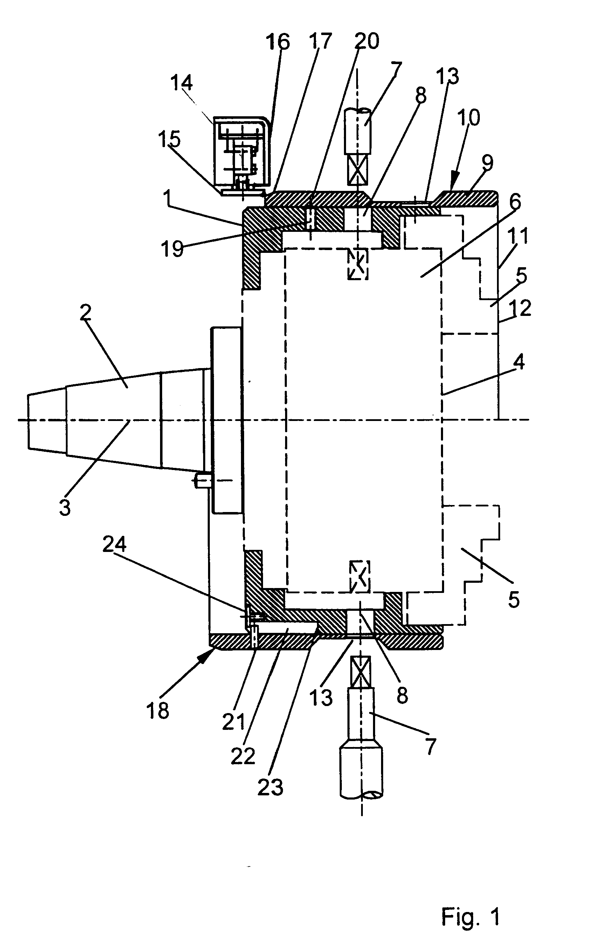

Fig. 1 zeigt einen Querschnitt durch einen Träger (1), der über ein Anschlußelement (2) mit einer nicht dargestellten Antriebswelle eines Antriebsmotores koppelbar ist. Der Träger (1) erstreckt sich dabei entlang einer Rotationsachse (3). Die Antriebswelle des Antriebsmotors ist im allgemeinen in Richtung der Rotationsachse ausgerichtet. Grundsätzlich ist es aber auch denkbar, über entsprechende Umlenkgetriebe eine andersartige Anordnung des Antriebsmotors vorzunehmen.

Der Träger (1) weist an seiner dem Anschlußelement (2) abgewandten Seite ein Backenfutter (4) auf, das aus Klemmbacken (5) besteht, die entlang von Backenführungen (6) verschiebbar angeordnet sind. Eine Verschiebung der Klemmbacken (5) kann nur mit Hilfe eines Verstellwerkzeuges (7) erfolgen, das in Eingriffsöffnungen (8) des Trägers (1) einführbar ist. Über eine geeignete Kopplung, beispielsweise über verzahnte Elemente oder spindelförmige Elemente mit Reitern, kann eine Positionierung der Klemmbacken (5) relativ zum Träger (1) erfolgen. Beim Entfernen des Verstellwerkzeuges (7) wird durch geeignete Hemmungen ein unbeabsichtigtes Verstellen der Klemmbacken (5) vermieden.

Der Träger (1) ist von einer Schutzhülse (9) umgeben, die relativ zum Träger (1) in Richtung der Rotationsachse (3) verschiebbar ist. In einer im oberen Bereich von Fig. 1 dargestellten Betriebs-Position (10) der Schutzhülse (9) ist eine Vorderkante (11) der Schutzhülse (9) derart angeordnet, daß eine Oberkante (12) der Klemmbacken (5) etwas überdeckt ist. Dies gewährleistet, daß in der Betriebs-Position (10) die Klemmbacken (5) nicht, oder zumindest nur unwesentlich, in eine dem Anschlußelement (2) abgewandte Richtung aus der Schutzhülse (9) herausragen. Quer zur Rotationsachse (3) deckt die Schutzhülse (9) ebenfalls das Backenfutter (4) ab.

Im Bereich der Schutzhülse (9) angeordnete Durchgangsöffnungen (13) sind in der Betriebs-Position (10) versetzt zu den Eingangsöffnungen (8) des Trägers (1) angeordnet. Hierdurch ist es nicht möglich, das Verstellwerkzeug (7) in die Eingriffsöffnungen einzuführen.

Ein Betriebsschalter (14) nimmt in der Betriebs-Position (10) der Schutzhülse (9) seine Einschalt-Stellung ein. Die Einschalt-Stellung ist vorzugsweise derart konstruktiv ausgelegt, daß ein Betätigungselement (15) des Betriebsschalters (14) in seiner Einschalt-Stellung aus einem Grundkörper (16) des Betriebsschalters (14) herausragt. Dies verhindert Fehlfunktionen des Betriebsschalters (14), beispielsweise bei einem Festklemmen des Betätigungselementes (15). Ein Festklemmen ist bei der gewählten konstruktiven Auslegung nur in der Ausschalt-Stellung des Betriebsschalters (14) möglich, hierdurch werden Gefährdungen des Bedienpersonals vermieden.

Zur Positionierung des Betätigungselementes (15) weist die Schutzhülse (9) eine entlang ihres Umfanges angeordnete Auflaufflanke (17) auf. Die Auflaufflanke (17) ist als eine Anschrägung ausgebildet, die bei einem Zurückschieben der Schutzhülse (9) aus der Betriebs-Position (10) in eine in der unteren Hälfte von Fig. 1 dargestellte Handhabungs-Position (18) hineindrückt und hierdurch den Betriebsschalter (14) in seine Ausschalt-Stellung überführt.

In der Handhabungs-Position (18) der Schutzhülse (9) sind die Eingriffsöffnung (8) und die Durchgangsöffnung (13) einander überdeckend angeordnet, so daß das Verstellwerzeuges (7) in die Eingriffsöffnung (8) eingeführt werden kann, wodurch die Klemmbacken (5) positioniert werden. Beispielsweise ist es möglich, mit Hilfe der Klemmbacken (5) ein zu bearbeitendes Werkstück mit dem Träger (1) zu verspannen.

Zur Vermeidung von unbeabsichtigten Verschiebungen der Schutzhülse (9) relativ zum Träger (1) ist im Bereich der einander zugewandten Begrenzungen von Träger (1) und Schutzhülse (9) ein Arretierungselement (19) angeordnet. Das Arretierungselement (19) kann als ein Federbolzen ausgebildet sein, der in eine korrespondierende Vertiefung (20) eingreift. Beispielsweise kann gemäß Fig. 1 das Arretierungselement (19) im Bereich des Trägers (1) angeordnet und die Vertiefung (20) im Bereich der Schutzhülse (9) vorgesehen werden. Es ist aber ebenfalls möglich, eine komplementäre Ausführungsform zu wählen. Bei einem Verschieben der Schutzhülse (9) muß zunächst eine Kraft überwunden werden, die das Arretierungselement (19) zurückschiebt. Erst nach einem Überwinden dieser Kraft ist ein Verschieben der Schutzhülse (9) möglich.

Ebenfalls ist es zweckmäßig, eine Begrenzung des Positionierweges der Schutzhülse (9) relativ zum Träger (1) vorzusehen. Eine Realisierungsmöglichkeit für eine derartige Begrenzung des Positionierungsweges ist in Fig. 1 dargestellt. Hier ist in eine Bohrung der Schutzhülse (9) ein Stift (21) eingesetzt, der innenseitig aus der Schutzhülse (9) in Richtung auf die Rotationsachse (3) herausragt. Der Stift (21) greift dabei in eine Längsnut (22) des Trägers (1) ein, die sich im wesentlichen parallel zur Rotationsachse (3) erstreckt. Die Längsnut (22) ist in Richtung auf die Eingriffsöffnung (8) von einem Absatz (23) begrenzt. Bei einem Anschlag des Stiftes (21) an den Absatz (23) befindet sich die Schutzhülse (9) in der Betriebs-Position (10). Zur Festlegung der Handhabungs-Position (18) ist ein Begrenzungselement (24) vorgesehen. Das Begrenzungselement (24) kann an dem Träger (1) angeordnet sein und sich bereichsweise in die Längsnut (22) hineinerstrecken. Beim Anschlag des Begrenzungselementes (24) an den Stift (21) nimmt die Schutzhülse (9) die Handhabungs-Position (18). Bei der in Fig. 1 dargestellten Ausführungsform ist das Begrenzungselement (24) als eine Schraube ausgebildet, die in eine Bohrung des Trägers (1) eingeschraubt ist und mit einem Schraubenkopf in die Längsnut (22) hineinragt.

Die Verwendung der erfindungsgemäße Schutzhülse in Verbindung mit dem Betriebsschalter weist folgende Vorteile auf. Durch die Anordnung der Schutzhülse im Bereich des Trägers wird in der Betriebs-Position gewährleistet, daß die Klemmbacken seitlich abgedeckt sind und somit eine Verletzungsgefahr vermieden ist. Darüber hinaus ist es in der Betriebs-Position der Schutzhülse nicht möglich, ein Werkzeug zur Verstellung der Backenfutter in den Träger einzuführen. Aufgrund der Anordnung der Durchgangsöffnungen und der Eingangsöffnungen ist ein Einführen des Werkzeuges nur in einer zurückgeschobenen Positionierung der Schutzhülse möglich. In dieser zurückgeschobenen Positionierung wird aber der Betriebsschalter ausgeschaltet, sodaß ein unbeabsichtigtes Anlaufen der Arbeitsmaschine verhindert wird. Es ist somit gesichert ausgeschlossen, daß die Arbeitsmaschine bei eingesetztem Werkzeug anlaufen kann und daß die ungeschützten Enden der Klemmbacken rotieren können.

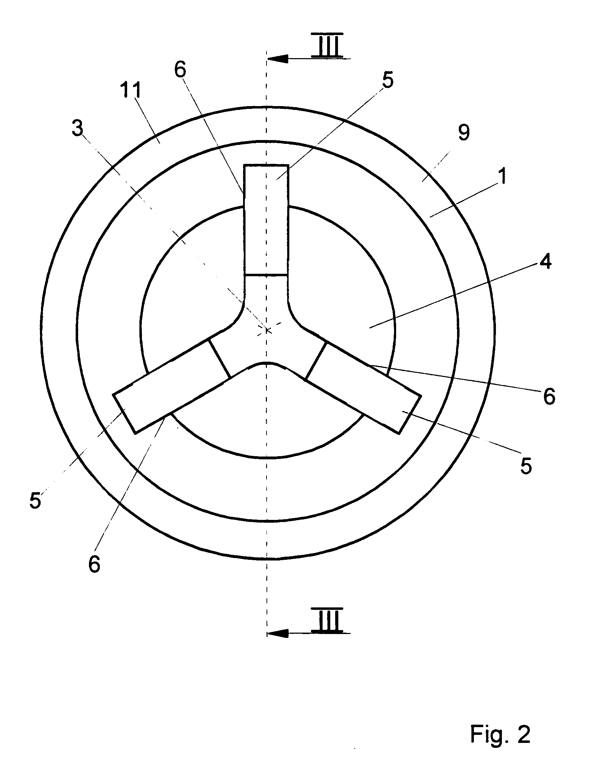

Fig. 2 veranschaulicht schematisch, daß die Klemmbacken (5) innerhalb der Bakkenführungen (6) positionierbar sind und mit Enden aus dem Träger (1) in radialer Richtung herausragen. Die Schutzhülse (9) umschließt das Backenfutter (4) in radialer Richtung und vermeidet so einen Kontakt einer Bedienperson mit den Klemmbacken (5) in der Betriebs-Position (10) der Schutzhülse (9).

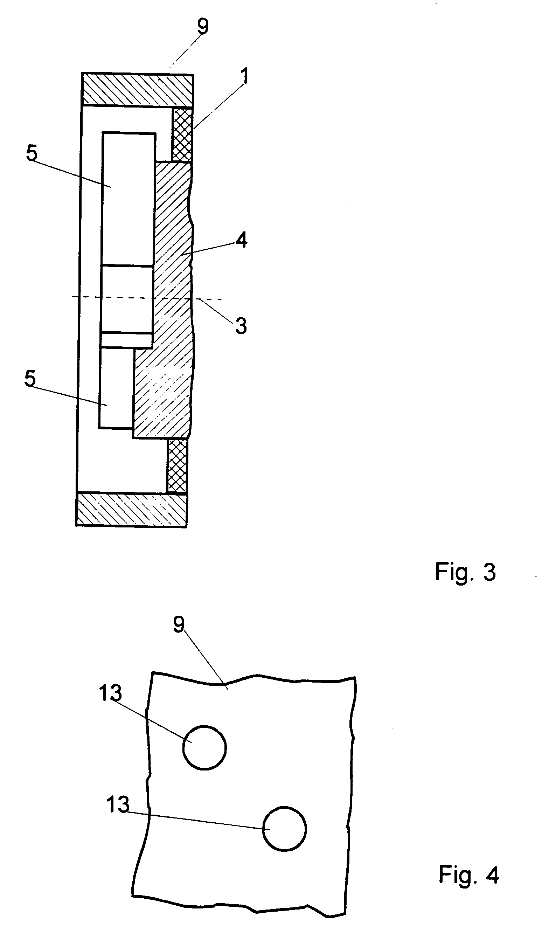

Fig. 3 veranschaulicht noch einmal schematisch, daß quer zur Rotationsachse (3)ein außenseitiger Kontakt mit den Klemmbacken (5) nicht möglich ist.

In Fig. 4 ist für einen Umfangsbereich der Schutzhülse (9) dargestellt, daß im Bereich der Schutzhülse (9) jeweils paarweise Durchgangsöffnungen (13) angeordnet sein können. Dies korrespondiert mit einer entsprechenden paarweisen Anordnung von Eingriffsöffnungen (8). Eine der Eingriffsöffnungen (8) ist zur Positionierung der Klemmbacken (5) und die andere der Eingriffsöffnungen (8) zur radialen Verschiebung des gesamten Backenfutters (4) vorgesehen, um eine rotationssymetrische Anordnung bezüglich der Rotationsachse (3) vorzunehmen. Zur Unterstützung einer einfachen Handhabung werden jeweils drei Paare von Durchgangsöffnungen (13) um 120° zueinander versetzt entlang des Umfanges der Schutzhülse (9) angeordnet. Korrespondierend sind im Bereich des Trägers (1) drei Paare von Eingangsöffnungen (8) vorgesehen.

Durch die radiale Umschließung der Klemmbacken (5) durch die Schutzhülse (9) in der Betriebs-Position (10) wird auch gewährleistet, daß keine unzulässig weite Anordnung der Klemmbacken (5) vorgenommen werden kann. Die Klemmbacken (5) müssen hierdurch zwangsweise immer soweit innerhalb der Backenführungen (6) angeordnet sein, daß eine ausreichende Befestigung der Klemmbacken (5) und damit ein sicherer Betrieb gewährleistet ist.

Es ist somit nicht möglich, einen maximalen Spannbereich, der bauartbedingt einzuhalten ist, zu überschreiten.

Als Verstellwerkzeug (7) zur Positionierung der Klemmbacken (5) relativ zur Bakkenführung (6) kann ein üblicher Spannschlüssel verwendet werden. Zur Gewährleistung des Rundlaufes des Backenfutters (4) können Keilstangenverstellungen verwendet werden.

## Patentansprüche

1. Spannelement für Arbeitsmaschinen mit rotierendem Backenfutter, bei dem
- Klemmbacken (5) des Backenfutters (4) relativ zu einer Rotationsachse (3) radial verstellbar sind,
- die Klemmbacken (5) verschiebbar in einem Träger (1) gelagert sind, der mit einer Antriebswelle verbunden ist,
- im Bereich des Trägers (1) Eingriffsöffnungen (8) zum Einführen eines Verstellwerkzeuges (7) für die Positionierung der Klemmbacken (5) angeordnet sind,
- der Träger (1) von einer Schutzhülse (9) umgeben ist, die in Richtung der Rotationsachse (3) verschiebbar geführt ist und
- die Schutzhülse (9) Durchgangsöffnungen (13) aufweist, die in einer Handhabungs-Position (18) der Schutzhülse (9) überdeckend zu den Eingriffsöffnungen (8) und in einer Betriebs-Position (10) der Schutzhülse (9) versetzt zu den Eingriffsöffnungen (8) angeordnet sind, und
- die Schutzhülse (9) in ihrer Betriebs-Position (10) die Klemmbacken (5) radial mindestens bereichsweise umschließt, **dadurch gekennzeichnet**, daß
- die Schutzhülse (9) in ihrer Handhabungs-Position (18) einen Betriebsschalter (14) in eine Ausschalt-Stellung bringt.

2. Spannelement nach Anspruch 1, **dadurch gekennzeichnet**, daß der Betriebsschalter (14) ein Betätigungselement (15) aufweist, das in der Ausschalt-Stellung des Betriebsschalters (14) in einen Grundkörper (16) des Betriebsschalters (14) hineingedrückt ist.

3. Spannelement nach Anspruch 1 oder 2, **dadurch gekennzeichnet**, daß drei Eingriffsöffnungen (8) entlang des Umfanges der Schutzhülse (9) jeweils um 120° versetzt zueinander angeordnet sind.

4. Spannelement nach einem der Ansprüche 1 bis 3, **dadurch gekennzeichnet**, daß
- jeweils zwei Paare von Durchgangsöffnungen (13) um 120° versetzt entlang des Umganges der Schutzhülse (9) angeordnet sind und
- bei jedem Paar von Durchgangsöffnungen (13) jeweils eine der Durchgangsöffnungen (13) mit einer Eingriffsöffnung (8) zur radialen Positionierung der Klemmbacken (5) und eine weitere Durchgangsöffnung (13) mit einer Eingriffsöffnung (8) zur rotationssymmetrischen Anordnung des Bakkenfutters (4) relativ zur Rotationsachse (3) korrespondiert.

5. Spannelement nach einem der Ansprüche 1 bis 4, **dadurch gekennzeichnet**, daß der Betriebsschalter (14) eine Zwangsöffnung aufweist.

6. Spannelement nach einem der Ansprüche 1 bis 5, **dadurch gekennzeichnet**, daß zur Festlegung der Betriebs-Position (10) der Schutzhülse (9) eine die Beweglichkeit der Schutzhülse (9) relativ zum Träger (1) begrenzender Anschlag vorgesehen ist.

7. Spannelement nach einem der Ansprüche 1 bis 6 **dadurch gekennzeichnet**, daß zur Festlegung der Handhabungs-Position (18) der Schutzhülse (9) ein die Beweglichkeit der Schutzhülse (9) relativ zum Träger (1) begrenzender Anschlag vorgesehen ist.

8. Spannelement nach einem der Ansprüche 1 bis 7, **dadurch gekennzeichnet**, daß im Kontaktbereich von Träger (1) und Schutzhülse (9) ein Arretierungselement (19) zur Vorgabe einer Mindestverstellkraft angeordnet ist.

9. Spannelement nach einem der Ansprüche 1 bis 8, **dadurch gekennzeichnet**, daß im Bereich der einander zugewandten Begrenzungsflächen von Träger (1) und Schutzhülse (9) ein Führungselement (21) zur Verhinderung von Rotationsbewegungen von Schutzhülse (9) relativ zum Träger (1) angeordnet ist.

## Claims

1. A clamping member for processing machines with a rotating jaw chuck, in which
- clamping jaws (5) of the jaw chuck (4) are radially adjustable relative to a rotation axis (3),
- the clamping jaws (5) are mounted displaceably in a support (1) which is connected to a drive shaft,
- in the region of the support (1) engagement openings (8) are arranged for the introduction of an adjusting tool (7) for the positioning of the clamping jaws (5),
- the support (1) is surrounded by a protective sleeve (9) which is displaceably guided in the direction of the rotation axis (3) and
- the protective sleeve (9) has through-holes (13) which in a handling position (18) of the protective sleeve (9) are arranged overlapping the engagement openings (8) and in an operating position (10) of the protective sleeve (9) are arranged staggered to the engagement openings (8), **characterised in that**
- the protective sleeve (9) in its operating position (10) surrounds the clamping jaws (5) radially at least partially and
- the protective sleeve (9) in its handling position (18) brings an operating switch (14) into a switch-off position.

2. A clamping member according to Claim 1, **characterised in that** the operating switch (14) has an actuating member (15) which in the switch-off position of the operating switch (14) is pressed into a base body (16) of the operating switch (14).

3. A clamping member according to Claim 1 or 2, **characterised in that** three engagement openings (8) are arranged respectively staggered by 120' to each other along the periphery of the protective sleeve (9).

4. A clamping member according to one of Claims 1 to 3, **characterised in that**
- in each case two pairs of through-holes (13) are arranged staggered through 120' along the periphery of the protective sleeve (9) and
- in the case of each pair of through-holes (13) respectively one of the through-holes (13) corresponds to an engagement opening (8) for the radial positioning of the clamping jaws (5) and a further through-hole (13) corresponds with an engagement opening (8) for the rotationally symmetrical arrangement of the jaw chuck (4) relative to the rotation axis (3).

5. A clamping member according to one of Claims 1 to 4, **characterised in that** the operating switch (14) has a compulsory opening.

6. A clamping member according to one of Claims 1 to 5, **characterised in that** to establish the operating position (10) of the protective sleeve (9) a stop is provided, delimiting the mobility of the protective sleeve (9) relative to the support (1).

7. A clamping member according to one of Claims 1 to 6, **characterised in that** to establish the handling position (18) of the protective sleeve (9) a stop is provided, delimiting the mobility of the protective sleeve (9) relative to the support (1).

8. A clamping member according to one of Claims 1 to 7, **characterised in that** in the contact region of support (1) and protective sleeve (9) an arresting member (19) is arranged to provide a minimum adjusting force.

9. A clamping member according to one of Claims 1 to 8, **characterised in that** in the region of the areas of contact of support (1) and protective sleeve (9) which face each other a guide member (21) is arranged to prevent rotational movements of the protective sleeve (9) relative to the support (1).

## Revendications

1. Elément de serrage pour machines équipées d'un mandrin rotatif à mors, dans lequel,
- des mors (5) du mandrin (4) peuvent se déplacer radialement par rapport à un axe de rotation (3),
- les mors (5) peuvent coulisser sur un support (1) relié à l'arbre d'entraînement,
- dans la zone du support (1) il est prévu des ouvertures (8) pour introduire un outil de réglage (7) servant à positionner les mors (5),
- le support (1) est entouré par une douille de protection (9) qui peut coulisser selon la direction de l'axe de rotation (9),
- la douille de protection (9) comporte des ouvertures de passage (13) qui, quand la douille (9) est en position de manipulation (18), se superposent aux ouvertures de prise (8) et sont décalées par rapport à ces dernières quand la douille (8) est en position de service,
caractérisé en ce que
- la douille de protection (9) quand elle est en position de service, entoure radialement au moins de manière étendue, les mors de serrage (5),
- la douille de protection (9), quand elle est en position de manipulation, amène un contacteur de service (14) en position de coupure.

2. Elément de serrage selon la revendication 1,
caractérisé en ce que
le contacteur de service (14) comprend un élément d'actionnement (15) qui est enfoncé dans le corps (16) du contacteur (14) quand celui-ci est en position de coupure.

3. Elément de serrage selon la revendication 1 ou 2,
caractérisé en ce que
trois ouvertures de prise (8) sont réparties à 120° l'une de l'autre sur la périphérie de la douille de protection (9).

4. Elément de serrage selon une des revendications 1 à 3, caractérisé en ce que
- deux paires d'ouvertures de passage (13) décalées chacune de 120°, sont disposées sur la périphérie de la douille de protection (9),
- pour chaque paire d'ouvertures de passage (13), à une des ouvertures (13) correspond une ouverture de prise (8) servant à positionner radialement les mors (5) et à l'autre ouverture (13) correspond une ouverture de prise (8) servant à positionner avec symétrie de rotation le mandrin à mors (47), relativement à l'axe de rotation (3).

5. Elément de serrage selon une des revendications 1 à 4, caractérisé en ce que
le contacteur de service (14) présente une ouverture de serrage.

6. Elément de serrage selon une des revendications 1 à 5, caractérisé en ce que
pour fixer la position de service (10) de la douille de protection (9), il est prévu une butée limitant la mobilité de la douille (9) par rapport au support (1).

7. Elément de serrage selon une des revendications 1 à 6, caractérisé en ce que
pour fixer la position de manipulation (18) de la douille de protection (9), il est prévu une butée limitant la mobilité de la douille de protection (9) par rapport au support (1).

8. Elément de serrage selon une des revendications 1 à 7, caractérisé en ce que
dans la zone où le support (1) et la douille de protection (9) sont en contact, est monté un élément d'arrêt (19) servant à fixer par avance une force minimale de déplacement.

9. Elément de serrage selon une des revendications 1 à 8, caractérisé en ce que
dans la zone où les surfaces du support (1) et de la douille de protection (9) sont en regard, il est prévu un élément de guidage (21) pour empêcher que la douille (9) tourne par rapport au support (1).
